# EUROPEAN PATENT APPLICATION

(11) **EP 4 779 780 A1**
(43) Date of publication of application: **22.07.2026**
(21) Application number: 25867227.8
(22) Date of filing: 06.08.2025
(51) Int. Cl.: H01M 50/30, H01M 50/249

(54) **BATTERY MODULE AND BATTERY PACK AND VEHICLE COMPRISING SAME**

(30) Priority: 26.11.2024 KR 20240170299
(71) Applicant: LG ENERGY SOLUTION, LTD., Seoul 07335 (KR)
(72) Inventor: KIM, Taewoo, Daejeon 34122 (KR); BAE, Joowon, Daejeon 34122 (KR)
(74) Representative: Plasseraud IP
(86) International application number: PCT/KR2025/011754
(87) International publication number: WO 2026/116670

(57) **Abstract**

A battery module according to one embodiment of the present invention includes a plurality of battery cells, a module housing configured to accommodate the battery cells, and a resin portion provided in an upper region of an internal space of the module housing, configured to surround an outer circumferential surface of the plurality of battery cells, and configured to induce gas discharged from the upper portion of the battery cells to be discharged to the outside of the module housing.

## Description

### [TECHNICAL FIELD]

The present invention relates to battery module and battery pack and vehicle including the same.

### [BACKGROUND ART]

Secondary batteries, unlike non-rechargeable primary batteries, refer to rechargeable batteries capable of charge and discharge, and are widely applied not only to portable devices but also to electric vehicles (EVs) and hybrid electric vehicles (HEVs) driven by electric power sources.

Types of secondary batteries widely used today include lithium-ion batteries, lithium polymer batteries, nickel-cadmium batteries, nickel-hydrogen batteries, and nickel-zinc batteries. The operating voltage of a single secondary battery cell, i.e., a unit battery cell, is approximately 2.5 V to 4.6 V. Accordingly, when a higher output voltage is required, a battery pack may be formed by connecting a plurality of battery cells in series. In addition, a battery pack may be configured by connecting a plurality of battery cells in parallel depending on the charge/discharge capacity requirements. Therefore, the number of battery cells incorporated in the battery pack may be variously set according to the required output voltage or charge/discharge capacity.

When a plurality of battery cells are connected in series and/or in parallel to form a battery pack, it is common practice to first configure a battery module including at least one battery cell, preferably a plurality of battery cells, and then construct a battery pack by combining at least one such battery module with other components. Here, a battery module refers to a unit composed of a plurality of battery cells connected in series and/or in parallel, while a battery pack refers to a structure in which a plurality of battery modules are interconnected in series and/or in parallel to enhance capacity and output.

Meanwhile, in the case of cylindrical battery cells, when a large amount of gas is generated inside, the notch portion typically ruptures and the vent bursts, thereby discharging gas and/or flames to the outside. In such a case, the discharged gas and/or flames may affect adjacent battery cells, which becomes a cause of thermal propagation. Therefore, there is a need to prevent a thermal event occurring in one battery cell from propagating to adjacent battery cells.

### [SUMMARY OF THE INVENTION]

### [TECHNICAL PROBLEM]

An object of the present invention is to discharge gas and/or flames from a battery cell in a desired direction.

Specifically, it is an object of the present invention to prevent a thermal event of a battery cell from propagating to adjacent battery cells by providing a resin portion on an upper side of the battery cell, so that gas and/or flames are guided outward of the battery module.

However, the technical problems to be solved by the present invention are not limited to those set forth above, and other objects not expressly mentioned will be clearly understood by those skilled in the art from the following description of the invention.

### [SOLUTION TO THE PROBLEM]

In one embodiment of the present invention, a battery module comprises: a plurality of battery cells; a module housing configured to accommodate the battery cells; and a resin portion disposed in an upper region of an internal space of the module housing, the resin portion being configured to surround an outer circumferential surface of the plurality of battery cells, and to guide gas discharged from an upper portion of the battery cell toward the outside of the module housing.

In one aspect of the present invention, a venting portion of the battery cell may be positioned to face upward within the battery module.

In another aspect of the present invention, the upper cover of the module housing may be provided with at least one venting hole.

Preferably, the resin portion may include a gas discharge portion that penetrates the battery module in the height direction and has a shape conforming to the surface of the battery cell.

More preferably, the gas discharge portion may be formed in the shape of a flow path.

In one aspect of the present invention, at least a portion of the battery cell may be accommodated within the gas discharge portion of the resin portion.

In another aspect of the present invention, an upper end of the battery cell may be configured to be located in an area between an upper surface and a lower surface of the resin portion.

Preferably, a venting space may be formed between the gas discharge portion and the upper cover.

In another aspect of the present invention, at least a portion of the gas discharge portion may be covered by the upper cover.

In one aspect of the present invention, the gas discharge portion may be configured to communicate with the venting hole.

In another aspect of the present invention, there is provided a battery module, wherein the gas discharge portion and the venting hole have a first region configured to be in fluid communication with each other.

In yet another aspect of the present invention, there is provided a battery module, wherein the gas discharge portion and the venting hole have a second region configured to overlap one another.

In one aspect of the present invention, the battery module may further include a resin support configured to support the resin portion from below.

Meanwhile, the present invention provides a battery pack comprising at least one battery cell according to the aforementioned embodiment.

In addition, the present invention provides a vehicle comprising at least one battery pack according to the aforementioned embodiment.

### [ADVANTAGEOUS EFFECTS OF THE INVENTION]

According to the present invention, gas and/or flame may be discharged from a battery cell in a desired direction.

Specifically, according to the present invention, by providing a resin portion on an upper part of a battery cell so that gas and/or flames are guided directly outward of the battery module, a thermal runaway event of an adjacent battery cell can be effectively prevented.

However, the advantageous effects of the present invention are not limited to those described above, and other technical effects not explicitly mentioned will be clearly understood by those of ordinary skill in the art from the following description.

### [BRIEF DESCRIPTION OF DRAWINGS]

The accompanying drawings, which are incorporated in and constitute a part of this specification, illustrate preferred embodiments of the present invention and, together with the detailed description set forth below, serve to further clarify the technical idea of the present invention. However, the present invention should not be construed as being limited to the matters illustrated in these drawings.
FIG. 1 is a drawing illustrating a battery module according to one embodiment of the present invention.
FIG. 2 is an exploded perspective view of the battery module shown in FIG. 1.
FIG. 3 is a drawing illustrating a battery cell included in a battery module according to one embodiment of the present invention.
FIG. 4 is a drawing illustrating the internal structure of a battery module according to one embodiment of the present invention.
FIG. 5 is a plan view of a battery module according to one embodiment of the present invention, viewed from above.
FIG. 6 is a drawing illustrating a battery pack including the battery module of FIG. 1.
FIG. 7 is a drawing illustrating a vehicle including the battery pack of FIG. 6.

### [MODES FOR CARRYING OUT THE INVENTION]

The advantages and features of the present invention, and the methods of achieving them, will become apparent with reference to the embodiments described in detail below in conjunction with the accompanying drawings. However, the present invention is not limited to the embodiments disclosed herein but may be implemented in various forms. These embodiments are provided only to ensure that the disclosure of the present invention is complete and to fully inform a person of ordinary skill in the art of the scope of the invention. The present invention is defined only by the scope of the claims. Accordingly, in some embodiments, well-known process steps, device structures, and technologies may not be described in detail to avoid obscuring the present invention. Throughout the specification, like reference numerals refer to like elements.

In the drawings, the thicknesses of layers and regions may be exaggerated to clearly show multiple layers and regions. Throughout the specification, similar parts are designated by the same reference numerals. When an element such as a layer, film, region, or plate is referred to as being "on" another element, it can be directly on the other element or intervening elements may be present. In contrast, when an element is referred to as being "directly on" another element, it is to be understood that there are no intervening elements present. Similarly, when an element is referred to as being "under" another element, it can be directly under the other element or intervening elements may be present. Conversely, when an element is referred to as being "directly under" another element, it is to be understood that there are no intervening elements present.

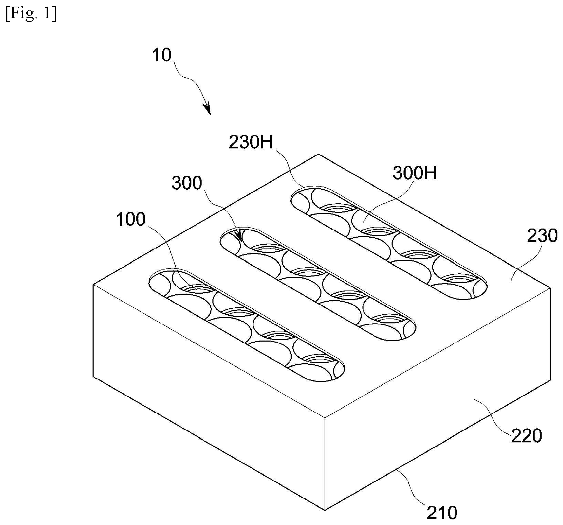

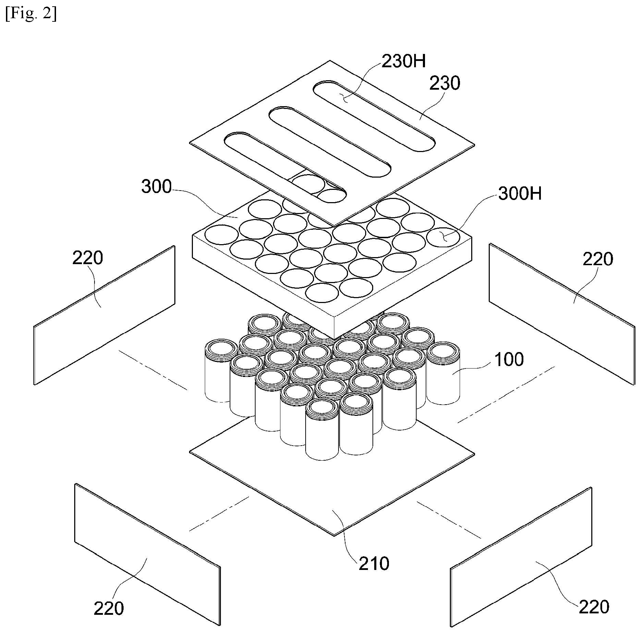

FIG. 1 is a perspective view illustrating a battery module (10) according to an embodiment of the present invention, and FIG. 2 is an exploded perspective view thereof.

Referring to FIGS. 1 and 2, a battery module (10) according to the present invention comprises a battery cell (100), a module housing (200), and a resin portion (300).

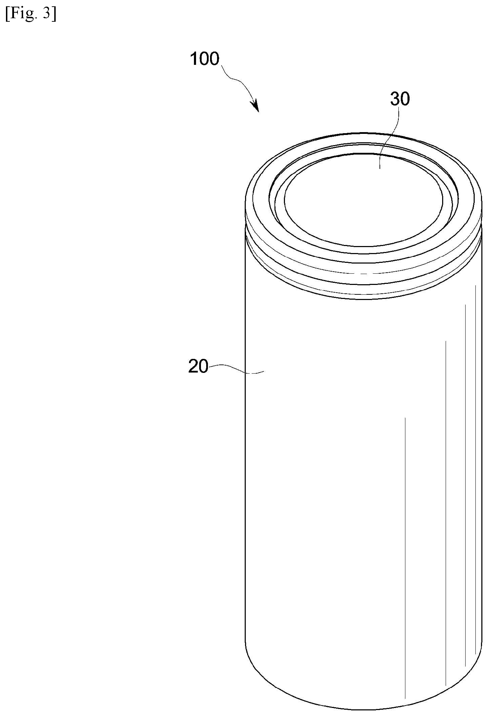

FIG. 3 is a drawing illustrating a battery cell (100) according to an embodiment of the present invention. A battery module (10) according to the present invention may comprise a plurality of battery cells (100).

Referring to FIG. 3, the battery cell (100) may be a secondary battery, and may be, for example, a cylindrical battery cell (100). However, the type of the battery cell (100) is not limited thereto, and other types of battery cells (100), such as pouch-type cells or prismatic cells, may also be employed in the battery module (10) of the present invention. The battery cell (100) of the present invention can be applied without any restrictions on the cell form-factor.

Hereinafter, an example in which the battery cell (100) is a cylindrical cell will be described with reference to FIG. 3. Referring to FIG. 3, the battery cell (100) includes an electrode assembly, a battery housing (20), and a top cap (30).

The electrode assembly comprises a first electrode tab and a second electrode tab. Specifically, the electrode assembly comprises a first electrode, a second electrode, and a separator interposed therebetween. The electrode assembly has a structure in which the first electrode, the second electrode, and the separator interposed therebetween are wound around a winding axis to define a core and an outer circumferential surface. That is, the electrode assembly applicable to the present invention may be a jelly-roll type electrode assembly. In this case, an additional separator may be provided on the outer circumferential surface of the electrode assembly for insulation from the battery housing (20). The electrode assembly may comprise, without limitation, a winding structure well known in the art. Meanwhile, in the present invention, the positive electrode active material coated on the positive electrode plate and the negative electrode active material coated on the negative electrode plate may be used without limitation, provided they are active materials known in the art.

Referring to FIGS. 1 and 2, the battery housing (20) is a substantially cylindrical receptacle with an opening formed on one side, and is composed of a conductive metal material. The side of the battery housing (20) and the lower surface located opposite to the opening are generally formed as one integral piece. That is, the battery housing (20) generally has an open portion on the upper side in the height direction and a closed portion on the lower side. The lower surface of the battery housing (20) may have a substantially flat shape. The battery housing (20) accommodates an electrode assembly through an opening formed on one side in the height direction. The battery housing (20) can also accommodate electrolyte through the opening.

The battery housing (20) may have a beading portion formed at an end adjacent to an opening provided at the top of the battery housing (20). The battery housing (20) may further include a crimping portion formed on the beading portion. The beading portion has a shape in which the outer periphery of the battery housing (20) is indented to a predetermined depth. More specifically, the beading portion may have a shape recessed inward in the area between the opening formed on one side of the battery housing (20) and the gas discharge portion (300H) that accommodates the electrode assembly. The beading portion is formed on an upper part of the electrode assembly. The inner diameter of the battery housing (20) in the region where the beading portion is formed is smaller than the outer diameter of the electrode assembly. The beading portion provides a support surface on which the top cap (30) can be seated. Additionally, the beading portion may provide a support surface on which at least a portion of the periphery of the current collector can be seated and coupled. That is, at least a portion of the periphery of the current collector and/or the periphery of the top cap (30) may be seated on the upper surface of the beading portion. To stably support at least a portion of the periphery of the current collector and/or the periphery of the top cap (30), the upper surface of the beading portion may extend in a direction substantially parallel to the lower surface of the battery housing (20), i.e., in a direction substantially perpendicular to the sidewall of the battery housing (20).

Referring to FIG. 3, the top cap (30) may be provided with a venting portion configured to prevent an increase in internal pressure caused by gas generated inside the battery housing (20). The venting portion may be configured to rupture when the internal pressure of the battery housing (20) rises above a predetermined level. For example, the venting portion may be formed in a part of the top cap (30) and may be a structurally weaker region than the surrounding area, so that it can be easily ruptured when internal pressure is applied. The venting portion may be, for example, an area having a reduced thickness compared to the surrounding area.

That is, if a thermal event occurs inside the battery cell (100) for any reason, venting gas may be generated, and the internal pressure of the battery housing (20) may increase due to the venting gas. In this case, since the venting portion is a structurally weaker region than the surrounding area and can be easily ruptured when the internal pressure of the battery cell (100) increases, the venting portion may rupture upon generation of venting gas.

In one aspect of the present invention, the venting portion of the battery cell (100) may be disposed to face upward within the battery module (10). Accordingly, when venting occurs, the gas discharged from the venting portion may be guided toward the upper side of the battery module (10).

In this case, the venting portion may be configured to form a substantially circular closed loop. Accordingly, when venting gas is discharged from inside the battery cell (100) and the top cap (30) is subjected to upward internal pressure, the venting portion may be ruptured, and the inner region of the circular closed loop of the top cap (30) may be torn away. Accordingly, smooth venting can be achieved.

Referring to FIGS. 1 and 2, the module housing (200) may be configured to accommodate the battery cell (100). Specifically, the module housing (200) may comprise a base plate (210), side plates (220), and an upper cover (230).

The base plate (210) may be configured to have a substantially plate-like shape extending in the horizontal direction. The side plates (220) may be configured to have a substantially plate-like shape extending in the vertical direction. In this case, for example, the base plate (210) and the side plates (220) may be joined together to form a lower housing. In this case, the base plate (210) and the side plates (220) may be configured to be detachably coupled to each other. Alternatively, the base plate (210) and the side plates (220) may be configured as separate components.

Referring to FIG. 2, the upper cover (230) may be positioned at the upper portion of the lower housing. The upper cover (230) may be configured to cover the upper portion of the battery cell (100). For example, the upper cover (230) may be configured to have a plate shape extending approximately horizontally. In one aspect of the present invention, the upper cover (230) may be configured to be detachable from the lower housing.

In another aspect of the present invention, the upper cover (230) may be configured to discharge venting gas. For example, the upper cover (230) may be provided with at least one venting hole (230H).

The venting hole (230H) can be configured to discharge venting gas. That is, the venting hole (230H) can be configured to have a hole shape that penetrates the upper cover (230) in the vertical direction. The venting hole (230H) may be provided in a form that extends long in one direction, for example, as shown in FIG. 1. However, the shape of the venting hole (230H) is not limited thereto. Meanwhile, the venting hole (230H) may be provided in an area adjacent to the venting portion of the battery cell (100). For example, in a structure in which the venting portion of the battery cell (100) is disposed facing upward, the venting hole (230H) may be provided in an upper region of the venting portion.

With this structure, high-temperature gas and flame generated inside the module can be discharged smoothly. A plurality of venting holes (230H) may be formed in the upper cover (230). For example, a plurality of the venting holes (230H) may be provided along the arrangement structure of the battery cells (100). In addition, according to this structure, even when a large amount of gas is generated inside the battery module (10), the gas can be smoothly discharged to the outside of the battery module (10) through the plurality of venting holes (230H). That is, the residence time of the venting gas inside the module housing (200) can be minimized.

In another aspect of the present invention, the venting hole (230H) may comprise a mesh screen. According to this structure, the mesh screen can prevent sparks generated inside the battery cell (100) from being discharged to the outside of the battery cell (100). In addition, it is possible to prevent fire from propagating to other battery modules (10) adjacent to the battery module (10) where a thermal event has occurred.

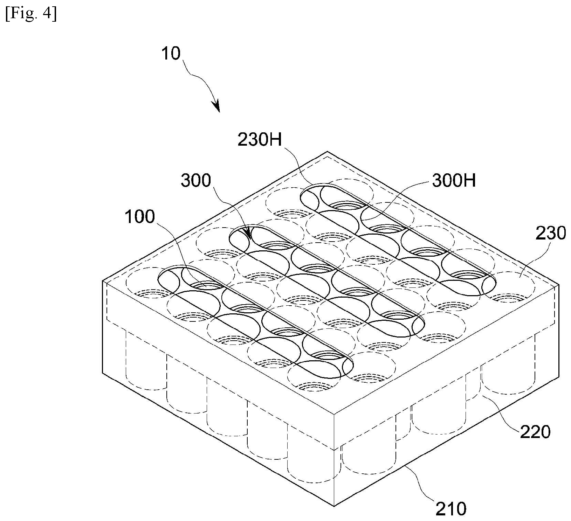

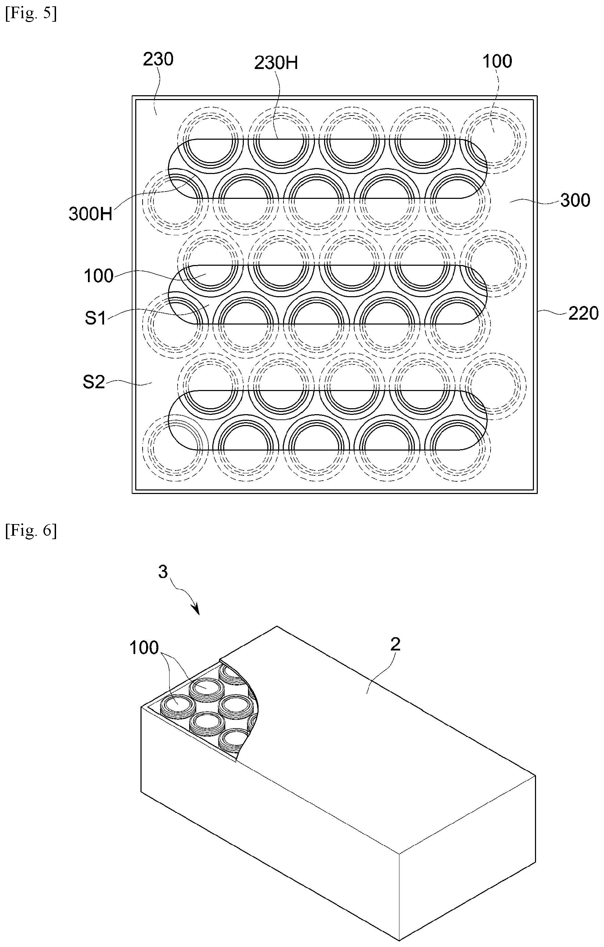

FIG. 4 is a drawing illustrating the internal structure of a battery module (10) according to one embodiment of the present invention, and FIG. 5 is a plan view illustrating the battery module (10) according to one embodiment of the present invention from above.

Referring to FIGS. 2 and 4, the resin portion (300) may be disposed in an upper region of the internal space of the module housing (200). In this case, the resin portion (300) may be configured to surround the outer circumferential surface of the plurality of battery cells (100). The resin portion (300) may be interposed between the battery cell (100) and the module housing (200), thereby fixing the battery cell (100) in position.

In one aspect of the present invention, the resin portion (300) may be configured to guide gas discharged from the upper portion of the battery cell (100) to the outside of the module housing (200). More specifically, referring to FIG. 2, the resin portion (300) may penetrate in the height direction of the battery module (10).

The resin portion (300) may include a gas discharge portion (300H) having a shape conforming to the surface of the battery cell (100). For example, in the case where the battery cell (100) is a cylindrical cell, the resin portion (300) may include at least one gas discharge portion (300H) having a diameter substantially equal to the diameter of the battery cell (100). Preferably, the resin portion (300) may include a plurality of gas discharge portions (300H) having a diameter substantially identical to the diameter of the battery cell (100). For example, the resin portion (300) may include a number of gas discharge portions (300H) corresponding to the number of battery cells (100). Specifically, one battery cell (100) may be accommodated within a single gas discharge portion (300H).

For example, the resin portion (300) may be configured in a block shape having a substantially rectangular parallelepiped form. That is, the resin portion (300) may be configured in a block shape having a predetermined thickness in the height direction. Additionally, the resin portion (300) may be configured to separate a plurality of battery cells (100) from one another in the horizontal direction. For example, the resin portion (300) may be configured to fill the entire area between the battery cells (100).

In this case, the block may include a plurality of through-holes extending therethrough in a cylindrical shape. In this case, the block corresponds to the main body of the resin portion (300), and the through-hole corresponds to the gas discharge portion (300H) of the resin portion (300).

According to this configuration, when venting gas is discharged through the venting portion provided on the upper portion of the battery cell (100), the venting gas may be collected in the venting space of the gas discharge portion (300H). In this case, since the diameter of the gas discharge portion (300H) matches the diameter of the battery cell (100), there is no gap between the resin portion (300) and the battery cell (100). Therefore, the venting gas collected in the venting space cannot flow between the resin portion (300) and the battery cell (100). Accordingly, the venting gas cannot enter the lower region of the resin portion (300). That is, the venting gas can only move to the upper region of the resin portion (300) and can ultimately be discharged to the outside of the module housing (200) through the venting hole (230H) provided in the upper cover (230).

In another aspect of the present invention, the gas discharge portion (300H) may be configured in the form of a flow path. Referring to FIG. 2, the gas discharge portion (300H) may be configured to have a flow path shape penetrating the battery module (10) in the height direction. In this case, the flow path may have a structure that is isolated and not in communication with an adjacent flow path. That is, each gas discharge portion (300H) has a structure such that gas does not communicate with another adjacent gas discharge portion (300H).

According to this configuration, when venting gas is discharged from one battery cell (100), the venting gas flows into only the corresponding gas discharge portion (300H), and does not flow into the gas discharge portion of another adjacent battery cell (100). Accordingly, according to the present invention, heat propagation to adjacent battery cells (100) can be effectively prevented.

In another aspect of the present invention, at least a portion of the battery cell (100) may be accommodated within the gas discharge portion (300H) of the resin portion (300).

For example, referring to FIG. 4, the upper end of the battery cell (100) may be positioned in an area between the upper surface and the lower surface of the resin portion (300). That is, when the battery module (10) is viewed from the side, the upper end of the battery cell (100) may be located between the upper and lower surfaces of the resin portion (300). According to this configuration, a venting space may be formed between the gas discharge portion (300H) and the upper cover (230). The venting space has a structure that is not in communication with the venting space of another adjacent gas discharge portion (300H). More specifically, the upper surface of the resin portion (300) may be configured to be in contact with the upper cover (230) of the module housing (200). Accordingly, the venting gas discharged into the venting space moves upward along the gas discharge portion (300H), guided in the height direction, and upon reaching the upper cover (230) of the module housing (200), it is finally discharged to the outside of the module housing (200) through the venting hole (230H) provided in the upper cover (230).

Accordingly, in a case where a thermal event occurs in one of the plurality of battery cells (100) accommodated in the battery module (10) and venting gas is discharged, the high-temperature venting gas and/or flames can be effectively prevented from propagating to an adjacent battery cell (100). Accordingly, the present invention can prevent a minor thermal event from escalating into a thermal runaway.

In one aspect of the present invention, the gas discharge portion (300H) may be at least partially covered by the upper cover (230).

For example, referring to FIGS. 4 and 5, the upper cover (230) may be configured to cover the upper surface of the gas discharge portion (300H). In this case, the upper cover (230) may be configured to be in direct contact with the upper surface of the gas discharge portion (300H). Additionally, the gas discharge portion (300H) may be configured to be in communication with the venting hole (230H).

According to this configuration, venting gas guided into the gas discharge portion (300H) may be discharged directly toward the venting hole (230H). That is, according to this configuration, it is possible to structurally block the venting gas guided into the gas discharge portion (300H) from re-entering another battery cell (100).

Referring again to FIG. 5, the gas discharge portion (300H) and the venting hole (230H) may include a first region (S1) configured to be in communication with each other. Meanwhile, the gas discharge portion (300H) and the venting hole (230H) may have a second region (S2) configured to overlap each other.

Specifically, the upper cover (230) may be configured to be in surface contact with the upper surface of the resin portion (300). At this time, the venting hole (230H) provided in the upper cover (230) may be configured to at least partially overlap the gas discharge portion (300H). For example, in the first region (S1), the venting hole (230H) of the upper cover (230) and the gas discharge portion (300H) of the resin portion (300) may have a structure allowing communication with each other. Accordingly, the venting gas may be smoothly discharged to the outside of the battery module (10) through the first region (S1).

Meanwhile, in the second region (S2), the plate structure of the upper cover (230) may be configured to physically block the gas discharge portion (300H) of the resin portion (300). Accordingly, the resin portion (300) can be effectively prevented from being separated from the module housing (200). Additionally, according to the above-described structure, it is possible to prevent the battery cell (100) from being displaced in the upward direction. That is, the plate structure of the upper cover (230) prevents the battery cell (100) and the resin portion (300) from being dislodged from the module housing (200).

According to the structure as described above, the venting gas discharged from the battery cell (100) can be effectively discharged to the outside of the battery module (10), while the battery cell (100) can be prevented from being detached or escaping from the battery module (10).

In one aspect of the present invention, the battery module (10) may include a resin support configured to support the resin portion (300) from below. Alternatively, in another embodiment, the resin portion (300) may be configured to bind the module housing (200) and the battery cell (100) together by being interposed between the inner surface of the module housing (200) and the outer surface of the battery cell (100), without requiring a separate resin support.

Meanwhile, the resin portion (300) application structure of the present invention can be applied not only to a top venting structure but also to a bottom venting structure.

For example, the resin portion (300) of the present invention may also be applied to a structure in which the venting portion of the battery cell (100) is arranged toward the lower side of the battery module (10), rather than toward the upper side. In this case, since venting is performed in the lower area of the battery module (10), the venting portion of the battery cell (100) may also be disposed in the lower area of the battery module (10). Additionally, the resin portion (300) may be provided in an area adjacent to the area where the venting portion is located. At this time, the resin portion (300) may be configured to extend toward the lower portion of the battery module (10). In such a bottom venting structure, the venting hole (230H) of the battery module (10) may be provided on the base plate (210) of the battery module (10). That is, the present invention is not limited to the top venting structure illustrated in FIGS. 1 to 5, but can also be applied to a bottom venting structure in which venting is performed downward.

In another aspect of the present invention, the resin portion (300) may include a thermally conductive material. That is, the resin portion (300) can transfer heat generated from the battery cell (100) to the outside.

According to a structure provided in the upper or lower region of the internal space of the module housing (200), the curing time of the resin portion (300) can be shortened because the resin portion (300) is accommodated only in a part of the internal space of the module housing (200). For example, if the amount of the resin portion (300) is large, it may take a long time to cure, thereby reducing work efficiency. However, according to the present invention, since the resin portion (300) is provided only in the upper or lower region of the internal space of the module housing (200), the required amount of the resin portion (300) can be kept relatively small. As a result, the time required for curing can be significantly reduced, improving work efficiency. Furthermore, handling during the manufacturing process of the battery module (10) can be facilitated.

Meanwhile, the resin portion (300) may be formed by hardening a liquid resin. With this structure, the surface of the battery cell (100) can be effectively covered. Therefore, the contact area between the battery cell (100) and the resin portion (300) can be maximized. Accordingly, heat dissipation efficiency can also be maximized.

FIG. 6 is a drawing illustrating a battery pack (3) including the battery module (10) of FIG. 1.

Referring to FIG. 6, a battery pack (3) according to the present invention may include at least one battery module (10) according to the present invention as described above. In addition, the battery pack (3) according to the present invention may include a pack case (50) configured to accommodate the at least one battery module (10). In addition to the battery module (10), various other components may further be included, such as components of the battery pack (3) known at the time of filing of the present invention, for example, a BMS, a pack case, a relay, and a current sensor.

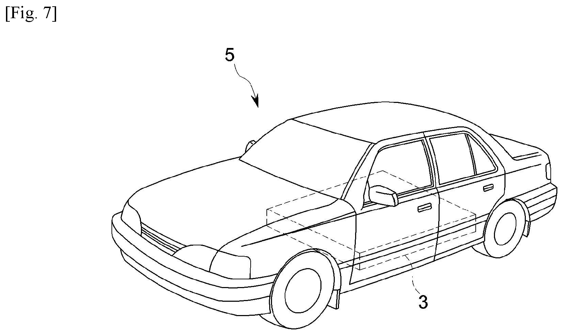

FIG. 7 is a drawing illustrating a vehicle (5) including the battery pack (3) of FIG. 6.

Referring to FIG. 7, a vehicle (5) according to the present invention may include at least one battery pack (3) according to the present invention. The battery module (10) according to the present invention may be applied to a vehicle (5), such as an electric vehicle (5) or a hybrid vehicle (5). That is, a vehicle (5) according to the present invention may include a battery module (10) or a battery pack (3) according to the present invention. In addition, a vehicle (5) according to the present invention may further include various other components included in the vehicle (5), in addition to the battery module (10) or the battery pack (3). For example, a vehicle (5) according to the present invention may further include, in addition to the battery module (10), a vehicle body, a motor, and a control device such as an ECU (electronic control unit).

Meanwhile, although terms indicating directions such as up and down are used in this specification, it is obvious to those skilled in the art that these terms are only for convenience of explanation and may vary depending on the location of the target object or the location of the observer.

While the present invention has been described with reference to the limited embodiments and the accompanying drawings, the present invention is not limited thereto, and it is to be understood that various modifications and variations can be made by those of ordinary skill in the art to which the present invention pertains within the technical spirit of the present invention and the scope of the appended claims and their equivalents.

### [REFERENCE NUMERALS]

5 Vehicle
3 Battery Pack
50 Pack Case
10 Battery Module
200 Lower Housing
210 Base Plate
220 Side Plate
230 Upper Housing
230H Venting Hole
300 Resin Portion
300H Gas Discharge Portion
S1 First Region
S2 Second Region

## Claims

1. A battery module, comprising:
a plurality of battery cells;
a module housing configured to accommodate the plurality of battery cells; and
a resin portion provided in an upper region of an internal space of the module housing, configured to surround an outer circumferential surface of the plurality of battery cells, and configured to guide gas discharged from an upper portion of the battery cells to an outside of the module housing.

2. The battery module of claim 1, wherein
a venting portion of the battery cell is disposed to face upward within the battery module.

3. The battery module of claim 1, wherein
an upper cover of the module housing is provided with at least one venting hole.

4. The battery module of claim 3, wherein
the resin portion includes a gas discharge portion that penetrates the battery module in a height direction and has a shape that conforms to a surface of the battery cell.

5. The battery module of claim 4,
wherein the gas discharge portion is configured in the form of a flow path.

6. The battery module of claim 4, wherein
at least a portion of the battery cell is accommodated within the gas discharge portion of the resin portion.

7. The battery module of claim 1, wherein
an upper end of the battery cell is configured to be located in an area between an upper surface and a lower surface of the resin portion.

8. The battery module of claim 4,
wherein a venting space is formed between the gas discharge portion and the upper cover.

9. The battery module of claim 4, wherein
at least a portion of the gas discharge portion is covered by the upper cover.

10. The battery module of claim 4, wherein
the gas discharge portion is configured to be in communication with the venting hole.

11. The battery module of claim 4,
wherein the gas discharge portion and the venting hole have a first region configured to be in communication with each other.

12. The battery module of claim 11,
wherein the gas discharge portion and the venting hole have a second region configured to overlap each other.

13. The battery module of claim 1, wherein
the battery module includes a resin support that supports the resin portion from below.

14. A battery pack, comprising at least one battery module according to any one
of claims 1 to 13.

15. A vehicle, comprising at least one battery pack according to claim 14.
